# EUROPÄISCHE PATENTANMELDUNG

(11) **EP 1 044 992 A1**
(43) Veröffentlichungstag der Anmeldung: **18.10.2000**
(21) Anmeldenummer: 00107049.9
(22) Anmeldetag: 03.04.2000
(51) Int. Cl.: C08F 10/00, C08F 4/26, C08F 4/70

(54) **Katalysatorsystem zur Olefinpolymerisation**

(30) Priorität: 14.04.1999 DE 19916782; 09.07.1999 DE 19931873
(71) Anmelder: Bayer Aktiengesellschaft, 51368 Leverkusen (DE)
(72) Erfinder: Engehausen, Rüdiger, Dr., 41539 Dormagen (DE); Nentwig, Wolfgang, Dr., 51465 Bergisch Gladbach (DE); Schertl, Peter, Dr., 51373 Leverkusen (DE); Arndt-Rosenau, Michael, Dr., 22532 Hamburg (DE); Pyrlik, Oliver, 20253 Hamburg (DE); Guillemot, Maud, Dr., 20251 Hamburg (DE)

(57) **Zusammenfassung**

Gegenstand der Erfindung ist ein Katalysatorsystem enthaltend Bisiminopyridylkomplexe des Cobalts und/oder Eisens mit sperrigen Substituenten am Bisiminopyridylliganden, ein Verfahren zur Polymerisation von α-Olefinen, insbesondere Ethylen, sowie die Verwendung der im Verfahren herstellbaren Polyolefine zur Herstellung von Formkörpern aller Art.

## Beschreibung

Gegenstand der Erfindung ist ein neues Katalysatorsystem enthaltend Bisiminopyridylkomplexe des Cobalts und/oder Eisens mit sperrigen Substituenten am Bisiminopyridylliganden, ein Verfahren zu deren Herstellung, ein Verfahren zur Polymerisation von α-Olefinen, insbesondere Ethylen, sowie die Verwendung der im Verfahren herstellbaren Polyolefine zur Herstellung von Formkörpern aller Art.

WO-A-98/27124 beschreibt ein Verfahren zur Polymerisation von Ethylen mittels Bisiminopyridylcobalt- oder -eisenkomplexen der allgemeinen Formel (I) und Cokatalysatoren, sowie die Trägerung derartiger Katalysatorsysteme in flüssiger Phase oder im Wirbelschichtverfahren. WO-A-98/30612 beschreibt ein Verfahren zur Polymerisation von Propylen mittels der in WO-A-98/27124 offenbarten Katalysatoren.

WO-A-99/02472 beschreibt Bisiminopyridylkomplexe des Eisens und deren Verwendung zur Oligo- und Polymerisation von Ethylen. WO-A-99/12981 beschreibt ein Katalysatorsystem aus Bisiminopyridylkomplexen des Eisens, Cobalts, Rutheniums oder Mangans zur Homo- und Copolymerisation von Ethylen und α―Olefinen.

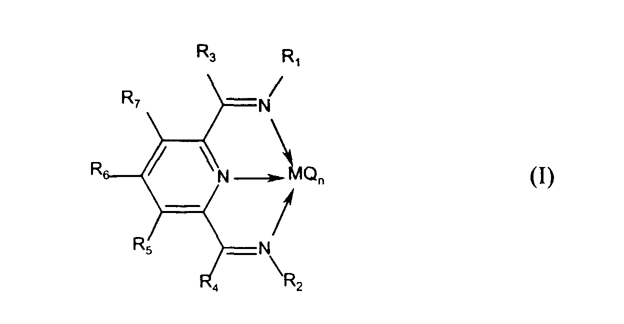

G.J.P. Pritovsek et al., Chem. Commun. 1998, S.849-50 (1998) beschreiben Bisiminopyridylkomplexe des Eisens und Cobalts der allgemeinen Formel (I) sowie deren Synthese und Einsatz als Polymerisationskatalysatoren.

B.L. Small, M. Brookhart, A.M.A. Bennett, J. Am. Chem. Soc. 120, 5. 4049-50 (1998) und B.L. Small, M. Brookhart, J. Am. Chem. Soc. 120, S. 7143-4 (1998) beschreiben ebenfalls Bisiminopyridylkomplexe des Eisens und Kobalts der allgemeinen Formel (I) sowie deren Synthese und Einsatz als Polymerisationskatalysatoren.

In C. Pellecchia, M. Mazzeo, D. Pappalardo, Macromol. Rapid. Commun., 19, 651-55 (1998) und B.L. Small, M. Brookhart, Macromolecules 1999, 32, 2120-30 (1999) werden ebenfalls Bisiminopyridylkomplexe des Eisens und Cobalts der allgemeinen Formel (I) sowie deren Verwendung als Polymerisationskatalysatoren für Propylen beschrieben.

Allen Dokumenten ist gemein, daß die offenbarten Bisiminopyridylkomplexe als Reste R³ und R⁴ unabhängig voneinander Wasserstoff oder gegebenenfalls substituierte Kohlenwasserstoffreste oder funktionelle Gruppen darstellen. Besonders bevorzugt sind R³ und R⁴ Wasserstoff- und/oder Methylreste. Ein wesentlicher Nachteil der dem Stand der Technik nach beschriebenen Synthesen ist, daß die Herstellung von Bisiminopyridylliganden und -komplexen mit sperrigen Resten R³ und R⁴ nicht zugänglich sind. Für die gemäß dem Stand der Technik zugänglichen Komplexe werden unbefriedigend lange Reaktionszeiten und geringe Gesamtausbeuten beschrieben.

Es war folglich eine Aufgabe der Erfindung, Bisiminopyridylkomplexe des Eisens und Cobalts mit verbesserten katalytischen Eigenschaften zur Verfügung zu stellen. Eine weitere Aufgabe der Erfindung war die Bereitstellung eines verbesserten Verfahrens zur Herstellung der besagten Bisiminopyridylkomplexe des Eisens und Cobalts. Eine weitere Aufgabe der Erfindung war die Bereitstellung eines alternativen Verfahrens zur Herstellung der besagten Bisiminopyridylkomplexe des Eisens und Cobalts. Eine weitere Aufgabe der Erfindung war die Bereitstellung eines Verfahrens zur Herstellung von Polyolefinen mit Hilfe der besagten Bisiminopyridylkomplexe des Eisens und Cobalts. Eine weitere Aufgabe der Erfindung war die Bereitstellung hochmolekularer Polyolefine unter Verwendung der besagten Bisiminopyridylkomplexe des Eisens und Cobalts. Eine weitere Aufgabe der Erfindung war die Bereitstellung hochmolekularer Polyolefine unter Verwendung der besagten Bisiminopyridylkomplexe des Eisens und Cobalts.

Überraschend wurde nun gefunden, daß man Katalysatorsysteme mit höherer Aktivität und Polyolefine mit signifikant engerer Molekulargewichtsverteilung erhält, wenn R³ und R⁴ sperrige Substituenten darstellen. Es wurde weiterhin ein Verfahren bereitgestellt, daß die Herstellung von Bisiminopyridylkomplexen des Eisens, Cobalts, Nickels oder Palladiums der allgemeinen Formel (I) mit sperrigen Resten R³ und R⁴ in hohen Ausbeuten erlaubt.

Gegenstand der Erfindung ist also ein Katalysatorsystem enthaltend eine Verbindung der allgemeinen Formel (I) 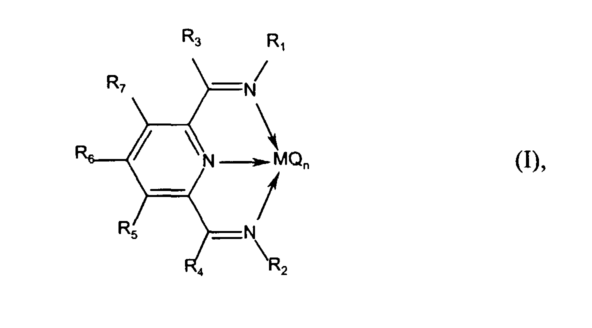 wobei
- M: ausgewählt ist aus Eisen, Cobalt, Nickel oder Palladium,
- Q: ein mono-anionischer oder nicht-anionischer Ligand ist,
- R¹ und R²: unabhängig voneinander einen gegebenenfalls substituierten Arylrest darstellen,
- R³ und R⁴: unabhängig voneinander einen sperrigen Substituenten darstellen,
- R⁵, R⁶ und R⁷: unabhängig voneinander ausgewählt sind aus Wasserstoff, gegebenenfalls substituierte C₁-C₁₀-Alkylgruppe, gegebenenfalls substituierter C₆-C₁₄-Arylrest oder Teile eines Ringsystems sind, und
- n: eine ganze Zahl im Bereich von 1 bis 3 darstellt,
sowie eine oder mehrere Übergangsmetallkomplexkation bildende Verbindungen.

Als mono-anionischer oder nicht-ionischer Ligand Q können sämtliche dem Fachmann bekannten Liganden, die sich mit der Metallkomplexkation bildenden Verbindung unter Bildung nicht- oder schwach-koordinierender Anionen abstrahieren lassen, eingesetzt werden.

Für nicht- oder schwach-koordinierende Anionen verweisen wir auf W.Beck et al., Chem. Rev. 88, 1405-1421 (1988) und S.Strauss 93, 927-42 (1993).

Im Regelfall wird Q ausgewählt aus Halogenid, Hydrid, C₁- bis C₁₀-Alkyl oder -Alkenyl, C₆-C₁₀-Cycloalkyl, C₆- bis C₁₄-Aryl, Alkylaryl mit C₁- bis C₁₀-Gruppierung im Alkylrest und C₆- bis C₁₄-Gruppierung im Arylrest, -OR⁸, OR⁸R⁹, -NR¹⁰R¹¹, NR¹⁰R¹¹R¹², -PR¹⁰R¹¹, PR¹⁰R¹¹R¹² bedeuten, wobei Q gleich oder verschieden sein kann, wobei eine oder mehrere der beiden Gruppierungen Q auch verbrückt sein können, und wobei R⁸ bis R¹² aus H, C₁- bis C₁₀-Alkyl, C₆- bis C₁₀-Cycloalkyl, C₆- bis C₁₄-Aryl, Alkylaryl oder Arylalkyl ausgewählt sein kann und gleich oder verschieden sein können.

Unter Halogen versteht der Fachmann Fluor, Chlor, Brom oder Jod, bevorzugt sind Chlor und Brom.

Unter C₁-C₁₀-Alkyl werden sämtliche dem Fachmann bekannte lineare oder verzweigte Alkylreste mit 1 bis 10 C-Atomen verstanden, wie Methyl, Ethyl, n-Propyl, i-Propyl, n-Butyl, i-Butyl, t-Butyl, n-Pentyl, i-Pentyl, neo-Pentyl und Hexyl, Heptyl, Oktyl, Nonyl und Decyl, die ihrerseits wiederum substituiert sein können. Als Substituenten kommen hierbei Halogen, Nitro, Hydroxyl, oder auch C₁-C₁₀-Alkyl, sowie C₆-C₁₄-Cycloalkyl oder -Aryl in Frage, wie Benzoyl, Trimethylphenyl, Ethylphenyl, Chlormethyl, Chlorethyl und Nitromethyl.

Unter C₆-C₁₄- Cycloalkyl werden sämtliche dem Fachmann bekannte ein- oder mehrkernige Cycloalkylreste mit 6 bis 14 C-Atomen verstanden, wie Cyclohexyl, Cycloheptyl, Cyclooctyl und Cyclononyl oder auch teil- oder vollhydriertes Fluorenyl, die ihrerseits wiederum substituiert sein können. Als Substituenten kommen hierbei Halogen, Nitro, C₁-C₁₀-Alkoxy oder auch C₁-C₁₀-Alkyl, sowie C₆-C₁₂-Cycloalkyl oder-Aryl in Frage, wie Methylcyclohexyl, Chlorcyclohexyl und Nitrocyclohexyl.

Unter C₆-C₁₄-Aryl werden sämtliche dem Fachmann bekannte ein- oder mehrkernige Arylreste mit 6 bis 14 C-Atomen verstanden, wie Phenyl, Naphthyl, Fluorenyl, die ihrerseits wiederum substituiert sein können. Als Substituenten kommen hierbei Halogen, Nitro, C₁-C₁₀-Alkoxy oder auch C₁-C₁₀-Alkyl, sowie C₆-C₁₄-Cycloalkyl oder-Aryl in Frage, wie Bromphenyl, Chlorphenyl, Toloyl und Nitrophenyl.

Bevorzugt wird Q ausgewählt aus Halogenid, besonders Chlorid und Bromid, Hydrid oder Methyl, Ethyl, Butyl.

Unter sperrigen Substituenten werden sämtliche dem Fachmann bekannte raumerfüllende Substituenten mit 4-50 C-Atomen, wie Phenyl, Diphenylmethyl, Triphenylmethyl, t.-Butyl, neo-Pentyl, Cyclohexyl, Cycloheptyl oder Aryl verstanden, die ihrerseits wiederum substituiert sein können. Als Substituenten kommen hierbei Halogen, Nitro oder auch Alkyl oder Alkoxyl, sowie Cycloalkyl oder Aryl in Frage, wie Phenyl, Toluylmethyl, Ditoluolmethyl, Tritoluolmethyl. Bevorzugt werden Phenyl, Benzyl, Triphenylmethyl, t.-Butyl, neo-Pentyl, Cyclohexyl, Fluorenyl, Anthracenyl, Phenanthrenyl, Bromphenyl, Chlorphenyl, Toluyl und Nitrophenyl.

Unter Aryl werden sämtliche dem Fachmann bekannte ein- oder mehrkernige Arylreste mit 6 bis 14 C-Atomen verstanden, wie Phenyl, Naphthyl, Anthracenyl, Phenanthrenyl, und Fluorenyl, die ihrerseits wiederum substituiert sein können. Als Substituenten kommen hierbei Halogen, Nitro oder auch Alkyl oder Alkoxyl, sowie Cycloalkyl oder Aryl in Frage, wie Bromphenyl, Chlorphenyl, Toluyl und Nitrophenyl.

Unter Alkyl werden sämtliche dem Fachmann bekannte lineare oder verzweigte Alkylreste mit 1 bis 50 C-Atomen verstanden, wie Methyl, Ethyl, n-Propyl, i-Propyl, n-Butyl, i-Butyl, t-Butyl, n-Pentyl, i-Pentyl, neo-Pentyl, Hexyl und die weiteren Homologen, die ihrerseits wiederum substituiert sein können. Als Substituenten kommen hierbei Halogen, Nitro, oder auch Alkyl oder Alkoxy, sowie Cycloalkyl oder Aryl in Frage, wie Phenyl, Trimethylphenyl, Ethylphenyl, Chlormethyl, Chlorethyl und Nitromethyl. Bevorzugt werden Methyl, Ethyl, n-Propyl, i-Propyl, n-Butyl, i-Butyl, t-Butyl und Benzoyl.

### Besonders bevorzugt stehen

- M: für Fe oder Co,
- Q: für Chlorid, Bromid oder Methyl,
- R¹ und R²: unabhängig voneinander für Phenyl, substituiertes Aryl, wie 2-Methylphenyl, 2-Ethylphenyl, 2-i-Propylphenyl, 2-tert.-Butylphenyl, 2,6-Dimethylphenyl, 2,6-Diisopropylphenyl, 2,6-di-tert.-Butylphenyl, 2,4,6-Trimethylphenyl, α-Naphtyl, β-Naphtyl,
- R³ und R⁴: unabhängig voneinander für Phenyl, subst. Phenyl, Isopropyl, tert.-Butyl, Cyclopentyl, Cyclohexyl,
- R⁵, R⁶ und R⁷: unabhängig voneinander für Wasserstoff, Methyl, Ethyl oder cyclische Ringe.
- n: gleich 2 oder 3.

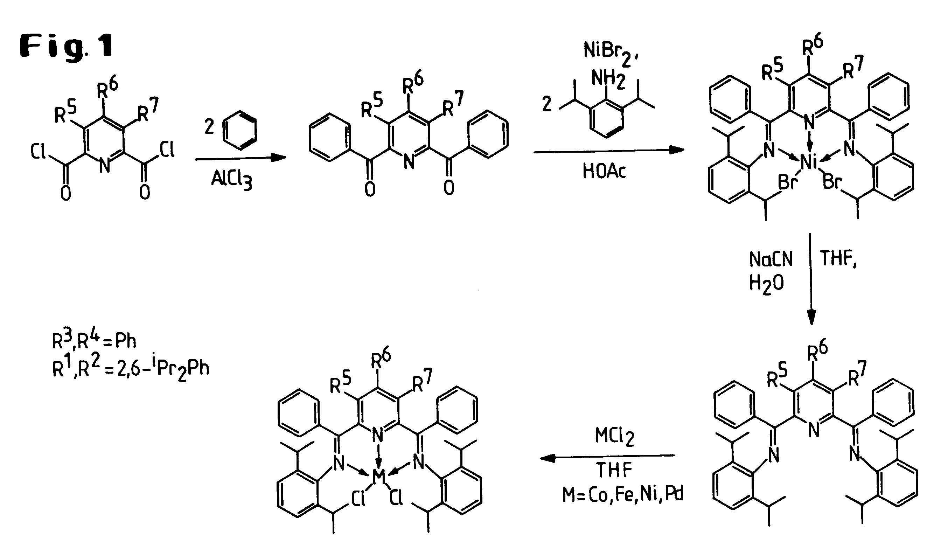

Die Herstellung der erfindungsgemäßen Verbindung gemäß Formel I erfolgt vorteilhaft durch Templatsynthese ausgehend von dem entsprechend substituierten Pyridinderivat der allgemeinen Formel II, wobei 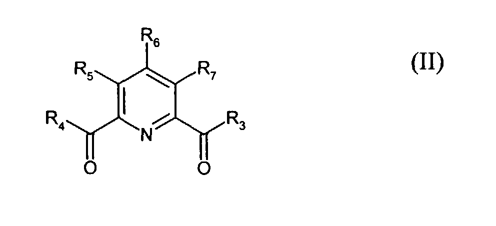
- R³ und R⁴: unabhängig voneinander einen sperrigen Substituenten darstellen, und
- R⁵, R⁶ und R⁷: unabhängig voneinander ausgewählt sind aus Wasserstoff, gegebenenfalls substituierte C₁-C₁₀-Alkylgruppe, gegebenenfalls substituierter C₆-C₁₄-Arylrest oder Teile eines Ringsystems sind,
durch Umsetzung mit dem entsprechend substituierten primären Aminderivat in Gegenwart eines Templatkomplexbildners, nachfolgender Freisetzung des Bisiminopyridylliganden und Umsetzung mit einer Metallverbindung zur Komplexverbindung gemäß der allgemeinen Formel I. Geeignete Templatkomplexbildner wie z. B. Nickeldibromid, sind dem Fachmann prinzipiell bekannt. Das Verfahren wird durch die Abbildung 1 verdeutlicht.

Als Templatsynthese wird eine Synthese unter Ausnutzung des Templateffektes verstanden, wobei durch die Koordination von Liganden, im erfindungsgemäßen Verfahren die substituierten Pyridinderivate der allgemeinen Formel (II) und die substituierten Aniline, um ein Zentralmetall, im erfindungsgemäßen Verfahren MX₂, wobei M für Eisen, Kobalt, Nickel oder Palladium steht, bevorzugt für Nickel, und X für einen monoanionischen Liganden steht, bevorzugt für Chlorid oder Bromid, eine räumliche Annäherung erzwungen wird, die für eine Reaktion der Liganden innerhalb der Ligandensphäre vorteilhaft ist, und welche die effiziente Bildung eines neuen Liganden durch Kondensationsreaktion begünstigt. Die Templatsynthese ist prinzipiell bekannt und u.a. in Angew. Chem. Int. Ed. Engl. 1994, 33, S. 375-384 ausführlich beschrieben. Auf diese Referenz wird ausdrücklich verwiesen.

Vorteilhaft am erfindungsgemäßen Verfahren ist, daß die Nachteile der im Stand der Technik beschriebenen Syntheseroute vermieden werden können und die Ausbeute deutlich erhöht wird, die Nebenproduktbildung sowie die erforderlichen Reaktionszeiten deutlich reduziert werden.

Als Metallkomplexkation-bildende Verbindung können beispielsweise offenkettige oder cyclische Aluminoxanverbindungen eingesetzt werden, die der allgemeinen Formel III oder IV genügen, 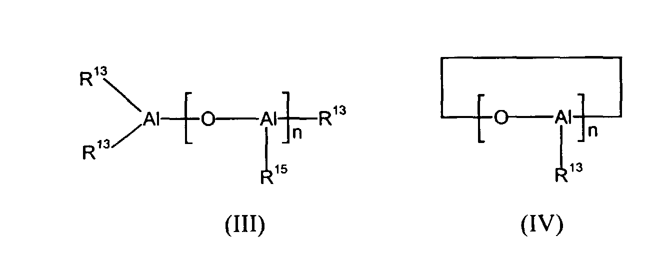 wobei
- R¹³: eine C₁- bis C₈-Alkylgruppe bedeutet, vorzugsweise eine Methyl- oder Ethylgruppe, und n Für eine ganze Zahl von 3 bis 30, bevorzugt 10 bis 25 steht.

Die Herstellung dieser oligomeren Aluminoxanverbindungen erfolgt üblicherweise durch Umsetzung einer Trialklyaluminiumlösung mit Wasser und ist u.a. in EP-A-284 708 beschrieben. In der Regel liegen die auf diese Weise erhaltenen oligomeren Aluminoxanverbindungen als Gemische unterschiedlich langer, sowohl linearer als auch cyclischer Moleküle vor, so daß n als Mittelwert anzusehen ist. Diese Aluminoxanverbindungen können auch im Gemisch mit anderen Metallalkylen, bevorzugt mit Aluminiumalkylen vorliegen.

Es hat sich als vorteilhaft erwiesen, die Verbindung der allgemeinen Formel (I) und die oligomere Aluminoxanverbindung in solchen Mengen einzusetzen, daß das molare Verhältnis zwischen Aluminium aus der Aluminoxankomponente und dem aus (I) im Bereich von 1:1 bis 20000:1, insbesondere im Bereich von 10:1 bis 2000:1, liegt.

Als Metallkomplexkation-bildende Verbindung können aber auch Koordinationskomplexverbindungen eingesetzt werden, ausgewählt aus der Gruppe der starken, neutralen Lewis-Säuren, der ionischen Verbindungen mit Lewis-sauren Kationen oder Brönstedt-sauren Kationen und nicht-koordinierenden Anionen.

Als starke neutrale Lewis-Säuren sind Verbindungen der allgemeinen Formel V bevorzugt, in der

M²X¹X²X³ (V)

- M²: ein Element der Gruppe 3 bedeutet, insbesondere B, Al oder Ga, vorzugsweise B,
- X¹, X² und X³: für H, C₁- bis C₁₀-Alkyl, C₁ bis C₁₄-Cycloalkyl, C₆- bis C₁₄-Aryl, Alkylaryl, Arylalkyl, Halogenalkyl, Halogenaryl, Halogenalkylaryl oder Halogenarylalkyl mit jeweils C₁- bis C₁₀-Alkyl-, C₆- bis C₁₄-Cycloalkyl- und C₆ bis C₁₄-Arylresten oder/und Fluor, Chlor, Brom oder Jod stehen, insbesondere für Halogenaryle, vorzugsweise perfluorsubstituiert.

Besonders bevorzugt im Sinne der Erfindung werden jedoch Verbindungen der allgemeinen Formel (V), in der X¹, X² und X³ gleich sind, vorzugsweise Tris(pentafluorophenyl)boran eingesetzt. Diese Verbindungen sowie Verfahren zu ihrer Herstellung sind an sich bekannt und u.a. in WO-93/03067 beschrieben. Weiterhin besonders bevorzugt werden Aluminiumtrialkyle und -dialkylhydride, wie Trimethylaluminium, Triethylaluminium, Triisobutylaluminium, Trioctylaluminium, Diisobutylaluminiumhydrid.

Als ionische Verbindungen mit Lewis- oder Brönstedt-sauren Kationen und nichtkoordinierenden Anionen sind Verbindungen der allgemeinen Formel VI geeignet,

[L]d+[(M²)m+A₁A₂ ... Aₙ]d- (VI)

wobei
- L: ein Lewis-saures Kation gemäß der Lewis-Säure-Base-Theorie bedeutet, vorzugsweise Carbonium-, Oxonium-, oder/und Sulfoniumkationen sowie kationische Übergangsmetallkomplexe, insbesondere Triphenylmethylkation, Silberkation oder Ferrocenylkation, oder L ein Brönstedt-saures Kation gemäß der Brönstedt-Säure-Base-Theorie bedeutet, bevorzugt Trialkylammonium-, Dialkylarylammonium-, oder/ und Alkyldiarylammonium, insbesondere N,N-Dimethylanilinium,
- M²: ein Element der Gruppe 3 bedeutet, insbesondere B, Al oder Ga, vorzugsweise B,
- A₁ bis Aₙ: für einfach negativ geladene Reste steht wie Hydrid, C₁- bis C₂₈-Alkyl, C₆-bis C₁₄-Cycloalkyl, C₆- bis C₁₄-Aryl, Alkylaryl, Arylalkyl, Halogenalkyl, Halogenaryl, Halogenalkylaryl oder Halogenarylalkyl mit jeweils C₁- bis C₂₈-Alkyl-, C₁- bis C₁₄-Cycloalkyl- und C₆- bis C₁₄-Arylresten, oder Halogen, Alkoxid, Aryloxid oder Organometalloid steht, und A₁ bis Aₙ gleich oder verschieden sind,
- d: eine ganze Zahl von 1 bis 6 bedeutet und d = n-m ist,
- n: für ganze Zahlen von 2 bis 8 steht, und
- m: eine ganze Zahl von 1 bis 6 ist.

Bevorzugte Anionen

[(M²)^{m+}A₁A₂ ... Aₙ]^{d-}

der allgemeinen Formel VI sind jene, in der A₁ bis Aₙ gleich, raumerfüllende, perfluorosubstituierte, aromatische Kohlenwasserstoffreste sind und M² gleich Bor oder Aluminium ist, insbesondere Tetrakis(pentafluorophenyl)borat.

Die Übergangsmetallverbindung oder die Übergangsmetallverbindungen werden im Bereich von 10⁻¹⁰ bis 10⁻¹ mol-% bezogen auf die (Gesamt-)Monomerkonzentration, bevorzugt im Bereich von 10⁻⁸ bis 10⁻⁴ mol-% eingesetzt. Die günstigste Konzentration ist durch wenige Vorversuche leicht zu ermitteln.

Es hat sich als vorteilhaft erwiesen, die Verbindung der allgemeinen Formel (I) und die Verbindung der allgemeinen Formeln (V) oder (VI) in solchen Mengen einzusetzen, daß das molare Verhältnis zwischen M² aus (V) oder (VI) und M aus (I) im Bereich von 0,25:1 bis 1:40, insbesondere im Bereich von 1:1 bis 1:10, liegt. Gegebenfalls kann ein Alkylierungsmittel der allgemeinen Formel (III) oder (IV) oder der allgemeinen Formel (VII) eingesetzt werden, wobei die relativen molaren Verhältnisse zwischen der Übergangsmetallkomponente, einer Verbindung der allgemeinen Formeln (V) oder (VI) sowie der Alkylierungskomponente (III), (IV) oder (VII) bevorzugt im Bereich von 1:0,25:2 bis 1:40:10000, besonders bevorzugt im Bereich von 1:1:10 bis 1:5:1000 liegt.

Als Alkylierungsmittel können beispielsweise Aluminiumverbindungen eingesetzt werden, die der allgemeinen Formel (VII) genügen,

Al(R¹³)₃₋ₙ(X⁴)ₙ (VII)

wobei
- R¹³: eine C₁- bis C₈-Alkylgruppe bedeutet, vorzugsweise eine Methyl-, Ethyl- und i-Butylgruppe, und n für eine ganze Zahl von 3 bis 30, bevorzugt 10 bis 25 steht,
- X⁴: Fluor, Chlor, Brom oder Jod, bevorzugt Chlor steht, und
- n: eine ganze Zahl zwischen 0 und 2 darstellt.

Es können selbstverständlich auch Mischungen unterschiedlicher Verbindungen der allgemeinen Formel (I) sowie Mischungen unterschiedlicher Metallkomplexkationbildender Verbindungen eingesetzt werden.

Es kann vorteilhaft sein, das erfindungsgemäße Katalysatorsystem auf einen Träger aufzubringen.

Als Trägermaterialien werden bevorzugt teilehenförmige, organische oder anorganische Feststoffe, deren Porenvolumen zwischen 0,1 und 15 ml/g beträgt, bevorzugt zwischen 0,25 und 5 ml/g, deren spezifische Oberfläche größer als 1 ist, bevorzugt 10 bis 1000 m²/g (BET), deren Korngröße zwischen 10 und 2500 µm beträgt, bevorzugt zwischen 50 und 1000 µm, und die an ihrer Oberfläche in geeigneter Weise modifiziert sein können, eingesetzt.

Die spezifische Oberfläche wird in üblicher Weise bestimmt nach Brunauer, Emmet und Teller, *J. Anorg. Chem. Soc.* 1938, *60,* 309, das Porenvolumen durch die Zentrifugationsmethode nach McDaniel, *J. Colloid Interface Sci*. 1980, *78*, 31 und die Teilchengröße nach Cornillaut, *Appl. Opt.* 1972, *11*, 265.

Als geeignete anorganische Feststoffe seien beispielsweise genannt, ohne die vorliegende Erfindung jedoch einschränken zu wollen: Silicagele, Fällungskieselsäuren, Tone, Alumosilikate, Talkum, Zeolithe, Ruß, anorganische Oxide, wie beispielsweise Siliciumdioxid, Aluminiumoxid, Magnesiumoxid, Titandioxid, anorganische Chloride, wie beispielsweise Magnesiumchlorid, Natriumchlorid, Lithiumchlorid, Calciumchlorid, Zinkchlorid, oder Calciumcarbonat. Die genannten, anorganischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 21, S. 439 ff (Silicagele), Band 23, S. 311 ff(Tone), Band 14, S. 633 ff (Ruße) und Band 24, S. 575 ff(Zeolithe).

Als organische Feststoffe eignen sich pulverförmige, polymere Materialien, bevorzugt in Form frei fließender Pulver, mit den obengenannten Eigenschaften. Beispielhaft seien genannt, ohne die vorliegende Erfindung einschränken zu wollen: Polyolefine, wie beispielsweise Polyethen, Polypropen, Polystyrol, Polystyrol-*co*-divinylbenzol, Polybutadien, Polyether, wie beispielsweise Polyethylenylenoxid, Polyoxytetramethylen oder Polysulfide, wie beispielsweise Poly-*p*-phenylensulfid. Besonders geeignete Materialien sind Polypropylen, Polystyrol oder Polystyrol-*co*-divinylbenzol. Die genannten organischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 19, S. 195 ff(Polypropylen), und Band 19, S. 265 ff (Polystyrol).

Die Herstellung des geträgerten Katalysatorsystems kann in einem weiten Temperaturbereich erfolgen. Im allgemeinen liegt die Temperatur zwischen Schmelz- und Siedepunkt des inerten Lösungsmittelgemisches. Üblicherweise wird bei Temperaturen von -50 bis +200°C, bevorzugt -20 bis 100°C, besonders bevorzugt 20 bis 60°C, gearbeitet.

Die Erfindung betrifft weiterhin ein Verfahren zur Homo- oder Co-Polymerisation von α-Olefinen, bevorzugt Ethen, Propen, Isobuten, 1-Buten, 1-Hexen und 1-Octen.

Die Polymerisation erfolgt bevorzugt indem man die α-Olefine mit dem erfindungsgemäßen Katalysatorsystem gelöst in geeigneten Lösungsmitteln, gasförmig, flüssig in feiner Verteilung oder suspendiert in flüssigem Verdünnungsmittel in Berührung bringt.

Den gasförmigen, flüssigen oder versprühten Monomeren können weitere Gase oder fein verteilte Flüssigkeiten zugemischt werden, die entweder der Verdünnung, der Versprühung oder der Wärmeabführung dienen.

Als Verdünnungsmittel oder Lösungsmittel eignen sich dem Fachmann bekannte Flüssigkeiten oder verflüssigte Gase, die die Polymerisation und das Katalysatorsystem nicht nachteilig beeinflussen, insbesondere gesättigte Kohlenwasserstoffe wie Pentan, Hexan, Cyclohexan, Benzin und Petrolether.

Die Polymerisation kann bei Drücken von 0,001 bar bis 1000 bar, bevorzugt 0,1 bis 100 bar, besonders bevorzugt 1 bis 20 bar, durchgeführt werden. Im allgemeinen wird die Polymerisation bei Temperaturen von -20 bis 250°C, bevorzugt bei 0 bis 200°C, besonders bevorzugt bei 20 bis 160°C, durchgeführt.

Ein weiterer Gegenstand der Erfindung ist die Verwendung der erfindungsgemäß erhältlichen Polymerisate zur Herstellung von Formkörpern aller Art, insbesondere Folien, Platten, Schläuche, Profile, Ummantelungen, Extrudate und Spritzgußartikel. Besagte Polymerisate zeichnen sich durch eine deutlich engere Verteilung des Zahlen- und Gewichtsmittels der Molmassen aus.

Die nachfolgenden Beispiele sollen die vorliegende Erfindung sowie die Durchführung damit katalysierter Homo- und Copolymerisationsverfahren darstellen, ohne diese jedoch auf die Beispiele einzuschränken.

### Beispiele:

### Katalysatorsynthese

### 2,6-Dibenzoylpyridinbis(2'-tert.-butylphenylimino)eisen(II)-chlorid (Katalysator A)

### Synthese von 2,6-Dibenzoylpyridin

In einem 500 ml Rundkolben mit Rückflußkühler werden unter Argon-Atmosphäre 20,0 g (98 mmol) Pyridin-2,6-dicarbonsäurechlorid in 250 ml trockenem Benzol mit 32,4 g (243 mmol) wasserfreiem Aluminiumtrichlorid versetzt. Es wird 4h unter Rückfluß gerührt, dann abgekühlt, über Nacht bei Raumtemperatur gerührt und dann erneut 6h unter Rückfluß gerührt. Nach dem Abkühlen wird der Ansatz vorsichtig in 500 ml Eiswasser gegossen. Die organische Phase wird abgetrennt und die wäßrige Phase zweimal mit je 100 ml Diethylether gewaschen. Die vereinigten organischen Phasen werden zweimal mit je 100 ml Wasser gewaschen und dann über Natriumsulfat getrocknet. Die Lösungsmittel werden am Rotationsverdampfer abgezogen und das Produkt wird aus Diethylether umkristallisiert. Ausbeute: 16,80 g.
¹H-NMR (in Aceton-d₆/TMS): δ = 8.32-8.26 (m,3H), 8.14-8.06 (m,4H), 7.7-7.4 (m,6H)
MS: 287, 259, 230, 182, 105, 77, 51

### Synthese von 2,6-Dibenzoylpyridinbis(2'-tert.-butylphenylimino)nickel(II)-bromid

Zu einer Lösung von 1,02 g (3,5 mmol) 2,6-Dibenzoylpyridin und 1,1 ml (7 mmol) 2-*tert.*-Butylanilin in 50 ml Eisessig werden 0,87 g (4 mmol) wasserfreies Nickeldibromid gegeben. Die Mischung wird 3 h am Rückfluß gerührt. Es fällt ein brauner Niederschlag aus, der warm abfiltriert wird. Der Rückstand wird zweimal mit jeweils 30 ml Diethylether gewaschen und getrocknet. Ausbeute: 2,23 g.
FT-IR (KBr): ν(C=N) = 1578 cm⁻¹.

### Synthese von 2,6-Dibenzoylbis(2'-tert.-butylphenylimino)pyridin

Zu einer Suspension von 1,00 g (1,3 mmol) 2,6-Dibenzoylpyridinbis(2'-*tert.*-butyl-phenylimino)nickel(II)-bromid in 30 ml THF werden 10 ml einer 10 %-igen wässrigen NaCN-Lösung gegeben und 2 h bei RT gerührt. Die organische Phase wird abgetrennt und über Natriumsulfat getrocknet. Nach dem Entfernen des Lösungsmittels bleibt das Bisiminopyridylderivat als gelbes Pulver zurück. Ausbeute: 0,71 g.
¹H-NMR (in CDCl₃) : δ = 8.11 (m,1H), 7.79 (m,2H), 7.43-7.26 (m,6H), 7.10-6.65 (m, 10H), 1.41 (s, 18H); MS : M⁺ = 549 g/mol.

### Synthese von 2,6-Dibenzoylpyridinbis(2'-tert.-butylphenylimino)eisen(II)-chlorid

Zu einer Lösung von 0,28 g (0,5 mmol) 2,6-Dibenzoylbis(2'-*tert.*-butylphenylimino)pyridin in 15 ml trockenem THF werden bei Raumtemperatur 0,06 g (0,5 mmol) wasserfreies Eisen(II)-chlorid gegeben und die Mischung 4 h bei RT gerührt. Anschließend wird die Lösung auf die Hälfte des Volumens eingeengt und mit 100 ml Pentan versetzt. Der Bisiminopyridyleisenkomplex fällt als grünblauer Niederschlag aus und wird nach dem Abfiltrieren im Vakuum getrocknet. Ausbeute: 0,07 g.
FT-IR (KBr) : ν(C=N) 1600 cm⁻¹.

### 2,6-Diacetylpyridinbis(2'-tert.-butylphenylimino)eisen(II)-chlorid (Katalysator B)

Die Synthese des Komplexes erfolgt wie von Gibson et al. in *Chem. Commun.* **1998,** 849 beschrieben.

### 2,6-Dibenzoylpyridinbis(2',6'-dimethylphenylimino)eisen(II)-chlorid (Katalysator C)

### Synthese von 2,6-Dibenzoylpyridinbis(2',6'-dimethylphenylimino)nickel(II)-bromid

Zu einer Lösung von 1,42 g (5 mmol) 2,6-Dibenzoylpyridin, dessen Herstellung erfolgt wie im Beispiel für die Herstellung von Katalysator A beschrieben, und 1,2 ml (10 mmol) 2,6-Dimethylanilin in 50 ml Eisessig werden 1,20 g (5,5 mmol) wasserfreies Nickeldibromid gegeben. Die Mischung wird 6 h unter Rückfluß gerührt. Es fällt ein orangebraunes Pulver aus, das warm abfiltriert wird. Der Rückstand wird zweimal mit jeweils 50 ml Diethylether gewaschen und getrocknet. Ausbeute: 3,35 g
FT-IR (KBr): ν(C=N) = 1579 cm⁻¹, 1610 cm⁻¹.

### Synthese von 2,6-Dibenzoylbis(2',6'-dimethylphenylimino)pyridin

Zu einer Suspension von 0,71 g (1 mmol) 2,6-Dibenzoylpyridinbis(2',6'-dimethyl-phenylimino)nickel(II)-bromid in 10 ml THF werden 10 ml einer 10 %-igen wässrigen NaCN-Lösung gegeben und 30 min bei RT gerührt. Die organische Phase wird abgetrennt und über Natriumsulfat getrocknet. Nach dem Entfernen des Lösungsmittels bleibt das Bisiminopyridylderivat als schwach gelbes Pulver zurück. Ausbeute: 0,40 g.
¹H-NMR (in CDCl₃) : δ = 8.07 (m,1H), 7.77 (m,2H), 7.43-7.36 (m,6H), 6.93-6.81 (m, 10H), 2.01 (s, 12H); MS : M⁺ = 494 g/mol.

### Synthese von 2,6-Dibenzoylpyridinbis(2',6'-dimethylphenylimino)eisen(II)-chlorid

Zu einer Lösung von 0,30 g (0,6 mmol) 2,6-Dibenzoylbis(2',6'-dimethyl-phenylimino)pyridin in 30 ml trockenem THF werden bei Raumtemperatur 0,08 g (0,6 mmol) wasserfreies Eisen(II)-chlorid gegeben und die Mischung 12 h bei RT gerührt. Anschließend wird die Lösung auf die Hälfte des Volumens eingeeengt und mit 100 ml Hexan versetzt. Der Bisiminopyridyleisenkomplex fällt als blauer Niederschlag aus und wird nach dem Abfiltrieren im Vakuum getrocknet. Ausbeute: 0,26 g.
FT-IR (KBr) : ν(C=N) 1561 cm⁻¹, 1578 cm⁻¹.

### 2,6-Diacetylpyridin(2',6'-dimethylphenylimino)eisen(II)-chlorid (Katalysator D)

Die Synthese des Komplexes erfolgt nach der von Gibson et al. in *Chem. Commun.* **1998,** 849 beschriebenen Weise.

### 2,6-Dibenzoylpyridin(2',6'-diisopropylphenylimino)eisen(II)-chlorid (Katalysator E)

### Synthese von 2,6-Dibenzoylpyridinbis(2',6'-diisopropylphenylimino)nickel(II)-bromid

Zu einer Lösung von 1,00 g (3,5 mmol) 2,6-Dibenzoylpyridin, dessen Herstellung erfolgt wie im Beispiel für die Herstellung von Katalysator A beschrieben, und 1,3 ml (7 mmol) 2,6-Diisopropylanilin in 60 ml Eisessig werden 0,87 g (4 mmol) wasserfreies Nickeldibromid gegeben. Die Mischung wird 14 h unter Rückfluß gerührt. Es füllt ein orangebraunes Pulver aus, das warm abfiltriert wird. Der Rückstand wird zweimal mit jeweils 20 ml Diethylether gewaschen und getrocknet. Ausbeute: 2,87 g
FT-IR (KBr): ν(C=N) = 1574 cm⁻¹, 1610 cm⁻¹.

### Synthese von 2,6-Dibenzoylbis(2',6'-diisopropylphenylimino)pyridin

Zu einer Suspension von 1,00 g (1,2 mmol) 2,6-Dibenzoylpyridinbis(2',6'-diisopropylphenylimino)nickel(II)-bromid in 30 ml THF werden 10 ml einer 10 %-igen wässrigen NaCN-Lösung gegeben und 2 h bei RT gerührt. Die organische Phase wird abgetrennt und über Natriumsulfat getrocknet. Nach dem Entfernen des Lösungsmittels bleibt das Bisiminopyridylderivat als schwach gelbes Pulver zurück. Ausbeute: 0,60 g.
¹H-NMR (in CDCl₃): δ = 8.30-6.96 (m,19H), 2.85 (m,4H), 1.09-0.89 (m,24 H).

### Synthese von 2,6-Dibenzoylpyridinbis(2',6'-diisopropylphenylimino)eisen(II)-chlorid

Zu einer Lösung von 0,30 g (0,5 mmol) 2,6-Dibenzoylbis(2',6'-diisopropylphenylimino)pyridin in 30 ml trockenem THF werden bei Raumtemperatur 0,06 g (0,5 mmol) wasserfreies Eisen(II)-chlorid gegeben und die Mischung 50 h bei RT gerührt. Anschließend wird die Lösung auf die Hälfte des Volumens eingeeengt und mit 100 ml Hexan versetzt. Der Bisiminopyridyleisenkomplex fällt als blaugrüner Niederschlag aus und wird nach dem Abfiltrieren im Vakuum getrocknet. Ausbeute: 0,24 g.
FT-IR (KBr) : ν(C=N) 1575 cm⁻¹.

### 2,6-Diacetylpyridin(2,6-diisopropylphenylimin)eisen(II)-dichlorid (Katalysator F)

### Synthese von 2,6-Diacetylpyridinbis(2',6'-diisopropylphenylimino)nickel(II)-bromid

Zu einer Lösung von 0,82 g (5 mmol) 2,6-Diacetylpyridin und 1,9 ml (10 mmol) 2,6-Diisopropylanilin in 50 ml Eisessig werden 1,20 g (5,5 mmol) wasserfreies Nickeldibromid gegeben, und die Mischung wird 3 h unter Rückfluß gerührt. Es fällt ein oranger Niederschlag aus, der warm abfiltriert wird. Der Rückstand wird dreimal mit jeweils 20 ml Diethylether gewaschen und getrocknet. Ausbeute: 2,63 g.
FT-IR (KBr): ν(C=N) = 1581 cm⁻¹, 1617 cm⁻¹.

### Synthese von 2,6-Diacetylbis(2',6'-diisopropylphenylimino)pyridin

Zu einer Suspension von 1,00 g (1,4 mmol) 2,6-Dibenzoylpyridinbis(2',6'-diisopropylphenylimino)nickel(II)-bromid in 20 ml Methylenchlorid werden 10 ml einer 10 %-igen wässrigen NaCN-Lösung gegeben und 2 h bei RT gerührt. Die organische Phase wird abgetrennt und über Natriumsulfat getrocknet. Nach dem Entfernen des Lösungsmittels bleibt das Bisiminopyridylderivat als gelbes Pulver zurück. Ausbeute: 0,68 g.
¹H-NMR (in CDCl₃): δ=8.52-7.10 (m,9H), 2.83 (sp,4H), 2.27 (s,6H), 1.19-1.12 (d,24H).

### Synthese von 2,6-Diacetylpyridinbis(2',6'-diisopropylphenylimino)eisen(II)-chlorid

Zu einer Lösung von 0,30 g (0,5 mmol) 2,6-Diacetylbis(2',6'-diisopropylphenylimino)pyridin in 30 ml trockenem THF werden bei Raumtemperatur 0,06 g (0,5 mmol) wasserfreies Eisen(II)-chlorid gegeben und die Mischung 12 h bei RT gerührt. Anschließend wird die Lösung auf die Hälfte des Volumens eingeeengt und mit 100 ml Hexan versetzt. Der Bisiminopyridyleisenkomplex fällt als blauer Niederschlag aus und wird nach dem Abfiltrieren im Vakuum getrocknet. Ausbeute: 0,26 g.
FT-IR (KBr) : ν(C=N) 1561 cm⁻¹, 1578 cm⁻¹.

### 2,6-Dibenzoylpyridin(2',6'-diisopropylphenylimino)cobalt(II)-chlorid (Katalysator G)

### Synthese von 2,6-Dibenzoylbis(2',6'-diisopropylphenylimino)pyridin

Die Synthese von 2,6-Dibenzoylbis(2'6'-diisopropylphenylimino)pyridin kann auch nach der im Beispiel für die Herstellung von Katalysator E beschriebenen Weise durchgeführt werden. Die Verbindung ist durch Reaktion von 2,6-Dibenzoylpyridin mit 2,6-Diisopropylanilin in Ethanol unter Einwirkung von Säuren jedoch nicht zugänglich.

Zu einer Lösung von 3,6 ml (19 mmol) 2,6-Diisopropylanilin und 0,91g (3,2 mmol) 2,6-Dibenzoylpyridin in 50 ml Toluol wird bei 0°C eine Lösung von 0,4 ml (3,5 mmol) Titantetrachlorid in 20 ml Toluol getropft. Nach beendeter Zugabe wird 90 min bei RT und anschließend 12 h unter Rückfluß gerührt. Nach Abkühlen auf RT wird die orangefarbene Suspension filtriert und der Rückstand dreimal mit jeweils 30 ml Toluol gewaschen. Das Lösungsmittel wird abdestilliert und zur Vervollständigung der Hydrochloridfällung werden 100 ml Hexan zugegeben. Es wird erneut filtriert und das Filtrat vom Lösungmittel befreit. Anschließend wird der Rückstand aus Methanol umkristallisiert. Bei -18°C kristallisiert 2,6-Dibenzoylbis(2'6'-diisopropylphenylimino)pyridin als schwach gelber Feststoff. Ausbeute: 0,92 g.
¹H-NMR (in CDCl₃) : δ = 8.05-6.83 (m,19H), 2.87 (m,4H), 1.10-0.89 (dd, 24 H).

### Synthese von 2,6-Dibenzoylpyridinbis(2',6'-diisopropylphenylimino)cobalt(II)-chlorid

Zu einer Lösung von 0,30 g (0,5 mmol) 2,6-Dibenzoylbis(2',6'-diisopropylphenylimino)pyridin in 30 ml trockenem THF werden bei Raumtemperatur 0,06 g (0,5 mmol) wasserfreies Cobalt(II)-chlorid gegeben und die Mischung 12 h bei RT gerührt. Anschließend wird die Lösung auf die Hälfte des Volumens eingeeengt und mit 100 ml Hexan versetzt. Der Bisiminopyridylcobaltkomplex fällt als goldgelber Niederschlag aus und wird nach dem Abfiltrieren im Vakuum getrocknet. Ausbeute: 0,26 g.
FT-IR (KBr) : ν(C=N) 1572 cm⁻¹.

### 2,6-Diacetylpyridin(2',6'-diisopropylphenylimino)cobalt(II)-chlorid (Katalysator H)

### Synthese von 2,6-Diacetylpyridinbis(2',6'-diisopropylphenylimino)cobalt(II)-chlorid

Zu einer Lösung von 0,24 g (0,5 mmol) 2,6-Diacetylbis(2'6'-diisopropylphenylimino)pyridin, dessen Herstellung erfolgte wie im Beispiel für die Herstellung von Katalysator F angegeben, in 30 ml trockenem THF werden bei Raumtemperatur 0,06 g (0,5 mmol) wasserfreies Cobalt(II)-chlorid gegeben und die Mischung 48 h bei RT gerührt. Es fällt ein goldbrauner Niederschlag aus, dessen Fällung durch Zusatz von 100 ml Hexan vervollständigt wird. Der Niederschlag wird abfiltriert und im Vakuum getrocknet. Ausbeute: 0,25 g.
FT-IR (KBr) : ν(C=N) 1571 cm⁻¹.

### Polymerisationversuche

### Polymierisation 1

Ein 11 Autoklav wird 1h bei 95°C im Ölpumpenvakuum ausgeheizt und hierbei dreimal mit Ar gespült. Anschließend wird er auf 30°C temperiert und mit 248 mg Methylaluminoxan und 200 ml trockenem Toluol befüllt. Es werden 3,4 bar Ethen aufgepreßt und nach Sättigung der Lösung wird 1 ml einer 5·10⁻⁴ mol/l Lösung des Katalysators A in Toluol zugesetzt. Es wird 30 min bei konstantem Druck von 3,4 bar polymerisiert. Der Versuch wird durch Ablassen des Ethens und Zugabe von 5 ml Ethanol beendet. Der Ansatz wird in eine Mischung von 500 ml Ethanol und 100 ml 10 %-ige Salzsäure gegeben und 18h bei Raumtemperatur gerührt. Das Polymer wird abfiltriert und zweimal mit Ethanol gewaschen. Es wurden 1,61 g Polymer isoliert.

### Polymerisation 2

Durchführung und Bedingungen wie in Versuch 1 jedoch mit 47 mg Methylaluminoxan statt 248 mg. Es wurden in diesem Beispiel 1,48 g Polymer isoliert.

### Polymerisation 3 / Vergleichsbeispiel

Die Durchführung des Versuches erfolgte wie in Polymerisation 1 jedoch mit Katalysator B als Katalysatorkomponente. Es wurden in diesem Vergleichsbeispiel 8,05 g Polymer isoliert.

### Polymerisation 4 /Vergleichsbeispiel

Die Durchführung des Versuches erfolgte wie in Polymerisation 2 jedoch mit Katalysator B als Katalysatorkomponente. Es wurden in diesem Vergleichsbeispiel 3,35 g Polymer isoliert.

### Polymerisation 5

Die Vorbehandlung des Autoklaven erfolgt wie in Beispiel 1 beschrieben. Der Autoklav wird mit 58 mg Methylaluminoxan und 400 ml trockenem Toluol befüllt und auf 0°C temperiert. Es werden 2,1 bar Ethen aufgepreßt und nach Sättigung der Lösung wird 1 ml einer 2·10⁻⁴ mol/l Lösung des Katalysators C in Toluol zugesetzt. Es wird 60 min bei 0°C und einem konstantem Druck von 2,1 bar polymerisiert. Der Versuch wird durch Ablassen des Ethens und Zugabe von 5 ml Ethanol beendet. Die Aufarbeitung erfolgt wie im Beispiel für Polymerisation 1 beschrieben. Es wurden 4,24 g Polymer isoliert.

### Polymerisation 6

Durchführung und Bedingungen wie in Versuch 5 jedoch bei 30°C und einem konstanten Ethendruck von 3,4 bar. Es wurden in diesem Beispiel 2,44 g Polymer isoliert.

### Polymerisation 7

Durchführung und Bedingungen wie in Versuch 5 jedoch bei 30°C und einem konstanten Ethendruck von 5,1 bar. Es wurden in diesem Beispiel 5,79 g Polymer isoliert.

### Polymerisation 8 / Vergleichsbeispiel

Die Vorbehandlung des Autoklaven erfolgt wie in Beispiel 1 beschrieben. Der Autoklav wird mit 116 mg Methylaluminoxan und 400 ml trockenem Toluol befüllt und auf 30°C temperiert. Es werden 3,4 bar Ethen aufgepreßt und nach Sättigung der Lösung wird 1 ml einer 1·10⁻⁴ mol/l Lösung des Katalysators D in Toluol zugesetzt. Es wird 90 min bei 30°C und einem konstantem Druck von 3,4 bar polymerisiert. Der Abbruch der Polymerisation und die Aufarbeitung erfolgen wie im Beispiel für Polymerisation 1 beschrieben. Es wurden in diesem Vergleichsbeispiel 0,28 g Polymer isoliert.

### Polymerisation 9

Die Durchführung des Versuches erfolgte wie in Polymerisation 5 beschrieben jedoch mit Katalysator E als Katalysatorkomponente. Es wurden in diesem Beispiel 0,72 g Polymer isoliert.

### Polymerisation 10

Durchführung und Bedingungen wie in Versuch 5 jedoch bei 30°C, einem konstanten Ethendruck von 3,4 bar und mit Katalysator E als Katalysatorkomponente. Es wurden in diesem Beispiel 1,19 g Polymer isoliert.

### Polymerisation 11

Durchführung und Bedingungen wie in Versuch 5 jedoch bei 60°C, einem konstanten Ethendruck von 4,9 bar und mit Katalysator E als Katalysatorkomponente. Es wurden in diesem Beispiel 0,72 g Polymer isoliert.

### Polymerisation 12 / Vergleichsbeispiel

Die Durchführung des Versuches erfolgte wie in Polymerisation 8 beschrieben jedoch mit Katalysator F als Katalysatorkomponente. Es wurden in diesem Vergleichsbeispiel 10,70 g Polymer isoliert.

### Polymerisation 13

Die Durchführung des Versuches erfolgte wie in Polymerisation 5 beschrieben jedoch mit Katalysator G als Katalysatorkomponente. Es wurden in diesem Beispiel 4,24 g Polymer isoliert.

### Polymerisation 14

Durchführung und Bedingungen wie in Versuch 5 jedoch bei 30°C, einem konstanten Ethendruck von 3,4 bar und mit Katalysator G als Katalysatorkomponente. Es wurden in diesem Beispiel 3,75 g Polymer isoliert.

### Polymerisation 15

Durchführung und Bedingungen wie in Versuch 5 jedoch bei 60°C, einem konstanten Ethendruck von 4,9 bar und mit Katalysator G als Katalysatorkomponente. Es wurden in diesem Beispiel 0,63 g Polymer isoliert.

### Polymerisation 16

Durchführung und Bedingungen wie in Versuch 5 jedoch bei 60°C, einem konstanten Ethendruck von 5,1 bar und mit Katalysator G als Katalysatorkomponente. Es wurden in diesem Beispiel 1,79 g Polymer isoliert.

### Polymerisation 17 / Vergleichsbeispiel

Die Durchführung des Versuches erfolgte wie in Polymerisation 5 beschrieben jedoch mit Katalysator H als Katalysatorkomponente. Es wurde bei 30°C und einem konstanten Ethendruck von 3,4 bar polymerisiert. Es wurden in diesem Vergleichsbeispiel 0,31 g Polymer isoliert.

### Polymerisation 18

In einem 11 Glasautoklav werden bei 30°C 281 mg Methylaluminoxan in 200 ml trockenem Toluol vorgelegt. Es wird bei 5,7 bar mit Propen gesättigt, anschließend 0,3 bar Ethen aufgepresst und nach Sättigung der Lösung werden 5 ml einer 3,6·10⁻³ mol/l Lösung des Katalysators C in Toluol zugesetzt. Es wird 60 min bei 30°C unter Nachdosierung von Ethen auf einen Gesamtdruck von 6 bar polymerisiert. Der Versuch wird durch Ablassen des Ethens und Zugabe von 5 ml Ethanol beendet. Der Ansatz wird in eine Mischung von 500 ml Ethanol und 100 ml 10 %-ige Salzsäure gegeben und bei Raumtemperatur gerührt. Das Polymer wird abfiltriert, zweimal mit Ethanol gewaschen und nach dem Trocknen 12,45 g Copolymer isoliert. Die über NMR-Spektroskopie ermittelte C₃-Einbaurate beträgt 15,2 %.

### Polymerisation 19

In einem 11 Glasautoklav werden bei 30°C 236 mg Methylaluminoxan in 200 ml trockenem Toluol vorgelegt. Es werden 6 bar Propen aufgedrückt und nach Sättigung der Lösung werden 5 ml einer 3,8·10⁻³ mol/l Lösung des Katalysators C in Toluol zugesetzt. Es wird 140 min bei 30°C und einem konstantem Druck von 6 bar polymerisiert. Der Versuch wird durch Ablassen des Ethens und Zugabe von 5 ml Ethanol beendet. Der Ansatz wird in eine Mischung von 500 ml Ethanol und 100 ml 10 %-ige Salzsäure gegeben und bei Raumtemperatur gerührt. Das Polymer wird abfiltriert und zweimal mit Ethanol gewaschen. Es wurden 1,38 g Polypropylen isoliert.

### Polymerisation 20

Die Durchführung des Versuches erfolgte wie in Polymerisation 19 beschrieben jedoch mit 259 mg MAO und 5 ml einer 1,6·10⁻³ mol/l Lösung des Katalysators D als Katalysatorkomponente. Nach 120 min Polymerisationszeit wurden in diesem Beispiel 11,21 g Polymer isoliert.

Die folgenden Tabellen stellen die erhaltenen Ergebnisse und die Eigenschaften der isolierten Polymere zusammen.

Anhand der Ergebnisse der Polymerisationsversuche ist zu erkennen, daß die erfindungsgemäßen Katalysatoren Ethen zu Polyethen mit signifikant engerer Molekulargewichtsverteilung polymerisieren. Die beobachtete enge Molekulargewichtsverteilung ist charakteristisch für 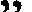 single-site"-Katalysatorsysteme. Aufgrund der höheren Kristallinität, u.a. ein Maß für den Verzweigungsgrad, stellt das erfindungsgemäß erhaltene Polyethen ein weniger verzweigtes Polymer dar, als es mit dem Vergleichssystem B hergestellt werden kann.

Es ist weiterhin zu ersehen, daß durch Substitution in den Positionen R³ und R⁴, gemäß Formel 1, Katalysatoren mit höherer Aktivität oder mit der Eigenschaft, Polymere höherer Molekulargewichte zu produzieren, erhalten werden. Im Falle der Cobalt-Katalysatoren ist hohe Aktivität und hohes Molekulargewicht nur durch die erfindungsgemäße Substitution der Position R³ und R⁴ zu erreichen.

Es ist weiterhin zu ersehen, daß mit den erfindungsgemäßen Katalysatoren die Herstellung von Polypropen mit höherem Molekulargewicht und höherem Isotaxie-Index gelingt. Diese Polypropen ist ein weiterer Gegenstand der Erfindung.

Aus Gründen der Wirtschaftlichkeit ist hohe Aktivität und aus Gründen der Materialeigenschaften und Verarbeitbarkeit sind hohe Molekulargewichte sowie höhere Stereoregularität der mit dem erfindungsgemäßen Katalysatorsystem hergestellten Polyolefine vorteilhaft.

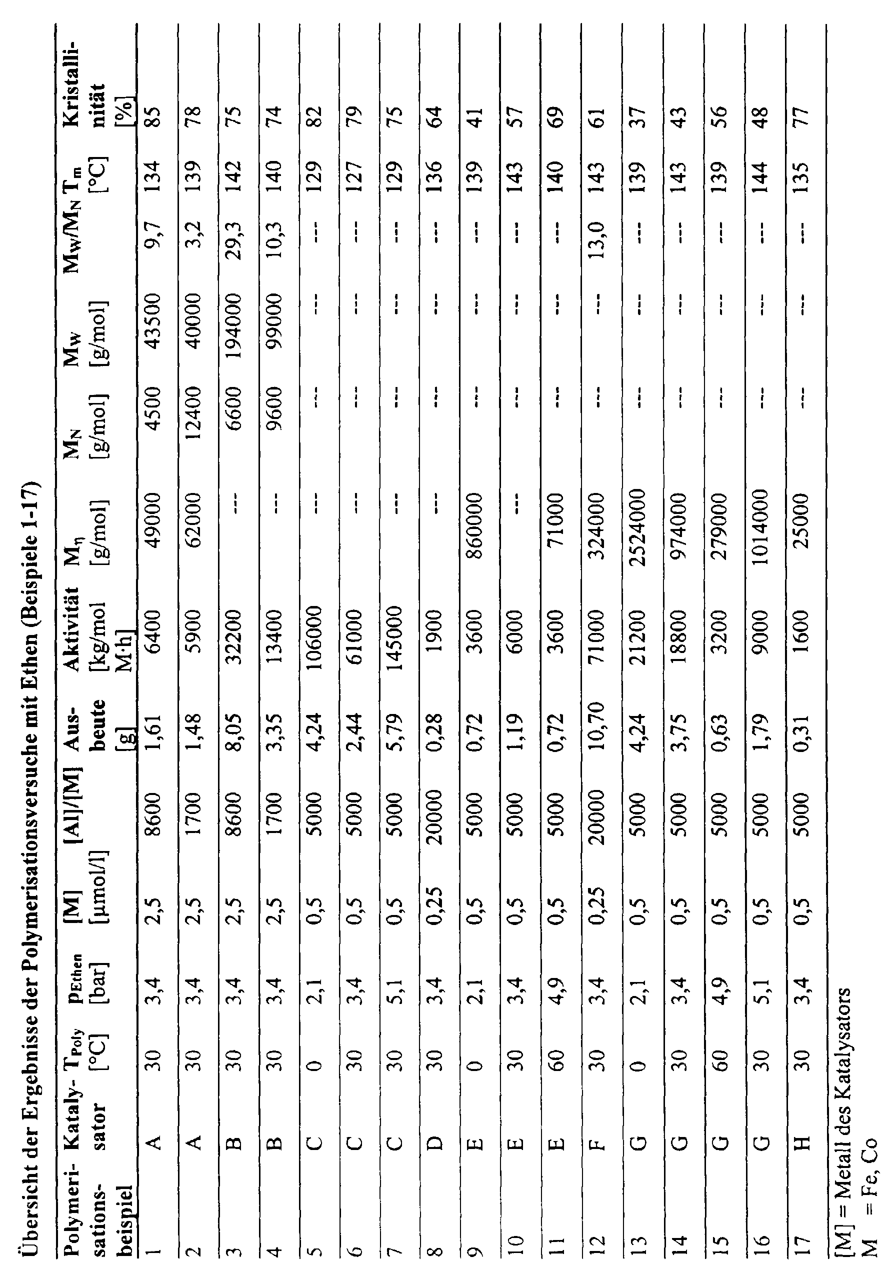

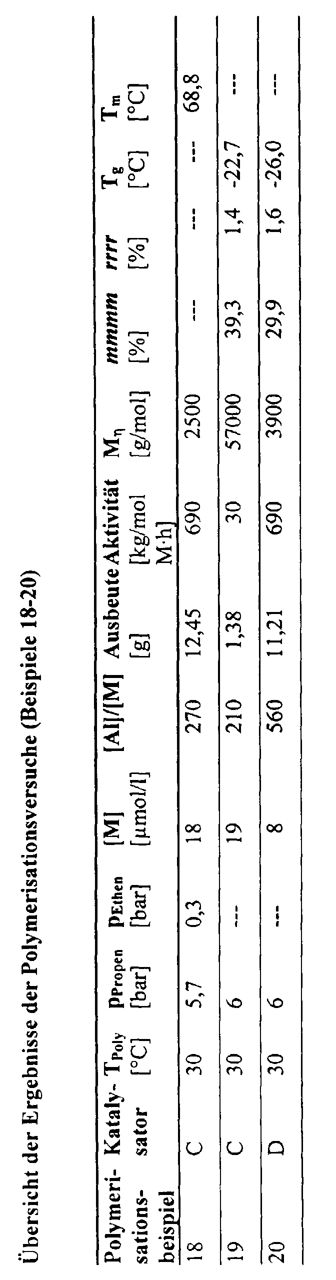

## Patentansprüche

1. Katalysatorsystem enthaltend eine Verbindung der allgemeinen Formel (I) 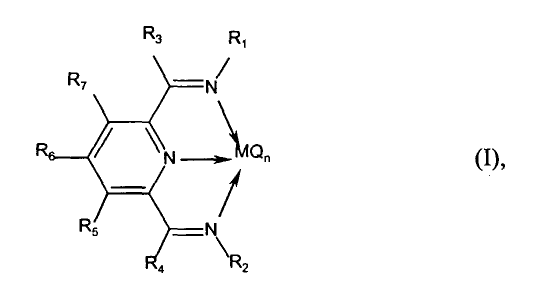 wobei
M ausgewählt ist aus Eisen, Kobalt, Nickel oder Palladium
Q ein mono-anionischer oder nicht-anionischer Ligand ist,
R¹ und R² unabhängig voneinander einen gegebenenfalls substituierten Arylrest darstellen,
R³ und R⁴ unabhängig voneinander einen sperrigen Substituenten darstellen,
R⁵, R⁶ und R⁷ unabhängig voneinander ausgewählt sind aus Wasserstoff, gegebenenfalls substituierte Alkylgruppe, gegebenenfalls substituierter Arylrest oder Teile eines Ringsystems sind, und
n eine ganze Zahl im Bereich von 1 bis 3 darstellt,
sowie eine oder mehrere Übergangsmetallkomplexkation bildende Verbindungen.

2. Katalysatorsystem nach Anspruch 1, dadurch gekennzeichnet, daß M für Eisen oder Cobalt steht.

3. Katalysatorsystem nach einem oder mehreren der Ansprüche 1 bis 2, dadurch gekennzeichnet, daß der sperrige Substituent für Phenyl, *tert.*-Butyl, Cyclohexyl oder Cyclopentyl steht.

4. Verfahren zur Herstellung eines Katalysatorsystems nach einem oder mehreren der Ansprüche 1 bis 3, dadurch gekennzeichnet, daß die Herstellung über eine Templatsynthese erfolgt.

5. Verfahren zur Homo- oder Copolymerisation von α-Olefinen, dadurch gekennzeichnet, daß man ein Katalysatorsystem gemäß einem oder mehreren der Ansprüche 1 bis 3 einsetzt.

6. Polyethylen mit einer mittleren Mohnasse Mη von mehr als 40 000 g/mol und einer Kristallinität unterhalb 85 %.

7. Verwendung der in einem Verfahren gemäß einem oder mehreren der Ansprüche 1-5 erhältlichen Polymerisate zur Herstellung von Formkörpern aller Art.
